# EUROPÄISCHE PATENTANMELDUNG

(11) **EP 1 881 293 A1**
(43) Veröffentlichungstag der Anmeldung: **23.01.2008**
(21) Anmeldenummer: 07011258.6
(22) Anmeldetag: 08.06.2007
(51) Int. Cl.: G01B 7/012, G01B 21/04

(54) **Taststift mit integriertem RFID-Chip**

(30) Priorität: 19.07.2006 DE 102006033443
(71) Anmelder: Saphirwerk Industrieprodukte AG, 2555 Brügg (CH)
(72) Erfinder: Bäbler, Jean, 1700 Fribourg FR (CH)
(74) Vertreter: DTS Zürich

(57) **Zusammenfassung**

Die vorliegende Erfindung stellt einen Taststift (2) vor, welcher einen Schaft mit einem ersten Ende (E1) und einem zweiten Ende (E2) umfasst" wobei der Schaft (2) an dem ersten Ende (E1) ein Kontaktelement (3) umfasst und mit dem zweiten Ende (E2) in einem Halter (1) anordenbar ist, und wobei der Taststift (2) einen RFID-Chip (50) umfasst. Weiter stellt die vorliegende Erfindung eine Messvorrichtung vor, die den erfindungsgemäßen Taststift umfasst, sowie ein Verfahren zum Berücksichtigen von den Taststift charakterisierenden Daten bei einer Messvorrichtung vor.

## Beschreibung

Die vorliegende Erfindung bezieht sich auf einen Taststift, insbesondere bezieht sich die vorliegende Erfindung auf einen Taststift mit integriertem RFID-Chip.

Fertigungs- und Messvorgänge werden aus wirtschaftlichen Gründen heutzutage mehr und mehr automatisiert.

Spezielle Messvorgänge unter Heranziehung von speziellen Taststiften, müssen die Biegekennzeichnung bzw. Verbiegung dieser Taststifte anhand von herstellerspezifischen Kenndaten bzw. Fehlerdaten kennen. Derartige Fehlerdaten werden heute zumeist händisch bei der Auswertung der Messvorgänge herangezogen. Eine derartige Vorgehensweise ist bei einer Vielzahl von Messungen zeit- und kostenintensiv.

Ein Verfahren zur Bestimmung der Daten der Biegekennzeichnung bzw. der Verbiegung von Taststiften mittels einer Eichvorrichtung wurde bereits in der EP 1248073 B1 ausführlich beschrieben.

Aufgabe der vorliegenden Erfindung ist es daher, eine Messvorrichtung und Verfahren zur Verfügung zu stellen, die es ermöglichen, Messvorgänge zu automatisieren und wirtschaftlicher zu gestalten.

Diese Aufgabe wird durch einen Taststift mit integriertem RFID-Chip gelöst.

Weitere vorteilhafte Ausgestaltungen der Erfindung sind in den abhängigen Ansprüchen angegeben.

Gemäß einem ersten Aspekt der vorliegenden Erfindung ist ein Taststift (2) vorgesehen, der ein Schaft (S) mit einem ersten Ende (E1) und mit einem zweiten Ende (E2) aufweist, wobei der Schaft (S) an dem ersten Ende (E1) ein Kontaktelement umfasst und mit dem zweiten Ende (E2) in einem Halter (1) anordenbar ist, und wobei der Taststift (2) einen RFID-Chip umfasst.

Ein Taststift ist bevorzugt Teil einer Messvorrichtung und weist Dimensionierungen und Materialeigenschaften auf, welche die Kriterien derartiger Messvorrichtungen erfüllen. Der Taststift weist bevorzugt die Form eines Zylinders auf, der an einem ersten Ende eine Verjüngung bzw. Anfassung aufweist, die wiederum bevorzugt die Form eines Zylinders aufweist. An einem zweiten Ende, welches von dem ersten Ende am meisten beabstandet ist, weist der Taststift bevorzugt die Form eines Kegelstumpfs auf.

Der Halter zur Aufnahme des Taststiftes ist bevorzugt aus Stahl, Titan etc. hergestellt. Der Schaft des Taststiftes, also der Mittelteil des Taststiftes, ist bevorzugt aus Hartmetall, Keramik (als übergeordneter Begriff wie Nitride, Oxide, Carbide, Boride, Ferrite, Silizide und deren Verbindungen in polykristalliner und monokristalliner Struktur), faserverstärkter Kunststoff, etc. hergestellt.

An dem ersten Ende des Taststiftes ist ein Kontaktelement angebracht, welches bevorzugt die Form einer Kugel aufweist (als übergeordneter Begriff und schließt eine Sacklochkugel, Halbkugel oder Vollkugel ein). Die Kugel ist bevorzugt aus Hartmetall, Keramik (als übergeordneter Begriff wie Nitride, Oxide, Carbide, Boride, Ferrite, Silizide und deren Verbindungen in polykristalliner und monokristalliner Struktur) oder Diamant gefertigt. Darüber hinaus eignet sich die Geometrie einer Kugel bevorzugt für die erfindungsgemäß vorgeschlagene Messvorrichtung. Das Kontaktelement kommt später während des Messvorgangs mit dem zu untersuchenden bzw. zu vermessenden Gegenstand bzw. Objekt in Berührung. Von dem Kontaktelement und dem Taststift sind die kraftabhängigen Biegekennlinien und geometrische Daten bekannt, also die den Taststift charakterisierenden Daten, welche die bei den Messungen zu berücksichtigenden Fehlerabweichungen angeben.

Die den Taststift charakterisierenden Daten, wie beispielsweise Biegekennlinien und geometrische Daten, werden in einem Messverfahren mittels einer Eichvorrichtung bestimmt, wie es beispielsweise in einer früheren Anmeldung (EP 1248073 B1) der Anmelderin vorgestellt wurde.

Weiter ist der Taststift mit dem Kontaktelement in einem Tastkopf bzw. einer Haltevorrichtung eingebracht. Der Taststift kann dabei bevorzugt in den Tastkopf bzw. die Haltevorrichtung eingesteckt, eingeschraubt, eingeklebt oder auf sonstige Weise in der Haltevorrichtung arretiert sein. Dadurch ist gewährleistet, dass es zwischen der Haltevorrichtung und dem Taststift zu einer festen und stabilen Verbindung kommt, welche für die Qualität und Genauigkeit der Messvorrichtung verantwortlich ist.

Unter einem RFID-Chip (Radio Frequency Identification-Chip) versteht man einen Chip, der es ermöglicht, Daten auf einem Transponder berührungslos und ohne Sichtkontakt lesen und speichern zu können. Dieser Transponder kann an Objekten angebracht werden, welche dann anhand der darauf gespeicherten Daten automatisch und schnell identifiziert und lokalisiert werden können.

Für ein RFID-System, welches einen RFID-Chip umfasst, wobei der Chip in einem RFID-Etikett, -Chip, -Tag, -Label oder Funketikett untergebracht ist, benötigt man weiter eine Sende-Empfangs-Einheit (auch Reader genannt), sowie einen Rechner, beispielsweise einen PC oder Server.

Die den Taststift kennzeichnenden Daten, also die Biegekennlinien und geometrischen Daten, oder aber auch Angaben über das Material des Schaftes, der Kugel, geometrische Daten, wie Länge des Schaftes, Durchmesser der Kugel, Rauheit der Kugel, etc. sind mittels einer Schreibvorrichtung auf dem RFID-Chip speicherbar.

In einem späteren erfindungsgemäßen Schritt werden diese Daten von einer Ausleseeinheit einer Messvorrichtung, die den erfindungsgemäßen Taststift umfasst, ausgelesen und bei den jeweiligen Messungen berücksichtigt. Eine aufwändige manuelle Eingabe der den Taststift charakterisierenden Daten ist somit nicht mehr notwendig, da die den Taststift charakterisierenden Daten automatisch über die Ausleseeinheit der Messvorrichtung ausgelesen werden.

Gemäß einem weiteren Aspekt der vorliegenden Erfindung ist es bevorzugt, dass der RFID-Chip an oder in dem Halter des Taststiftes angeordnet ist.

Dabei ist der RFID-Chip derart bevorzugt bei dem Taststift angeordnet, dass der RFID-Chip in einer Ausnehmung des Taststiftes eingebracht ist. Es ist ebenso denkbar, dass der RFID-Chip in den Taststift eingelassen ist oder an den Taststift als eine Art Etikette aufgeklebt ist. Dadurch ergibt sich der Vorteil, dass der RFID-Chip mit dem Taststift fest verbunden ist und gewährleistet ist, dass der RFID-Chip nicht von dem Taststift abgelöst und verloren gehen kann und es somit zu keinen Verwechslungen bei den Messungen kommen kann.

Gemäß einem weiteren Aspekt der vorliegenden Erfindung ist es bevorzugt, dass der RFID-Chip in dem zweiten Ende (E2) des Schaftes (S) des Taststifts (2)angeordnet ist. Das zweite Ende ist dabei jenes Ende des Taststiftes, welches mit dem Halter in die Haltevorrichtung der Messvorrichtung eingeschoben, eingeschraubt oder eingeklebt wird. Da dieses Ende des Taststiftes am meisten von dem Kontaktelement beabstandet ist, ist gewährleistet, dass während eines Messvorganges, dieses Ende des Taststiftes weniger fehleranfällig bei einem Auslesen des RFID-Chips ist.

Gemäß einem weiteren Aspekt der vorliegenden Erfindung ist es bevorzugt, dass auf dem RFID-Chip den Taststift charakterisierende Daten, also kraftabhängige Biegekennlinien und geometrische Daten gespeichert bzw. speicherbar sind. Derartige Daten können bevorzugt Biegekennzeichnungs-Daten sein. Unter solchen Daten versteht man bevorzugt jene Daten, die Auskunft über den Fehlerwert eines Taststiftes aufgrund von Deformationen während der Messungen durch Aufbringen einer Kraft F geben. Die gemessene Biegekennlinie wird mittels einer Eichvorrichtung auf dem RFID-Chip abgespeichert. Diese kraftabhängigen Biegekennlinien und geometrischen Daten werden später bei der Auswertung der Messungen berücksichtigt, um die tatsächlichen Messdaten zu erhalten und somit die Messunsicherheit verringern zu können.

Gemäß einem weiteren Aspekt der vorliegenden Erfindung ist es bevorzugt, dass auf dem RFID-Chip geometrische Daten des Taststifts speicherbar sind. Unter kraftabhängige Biegekennlinien versteht man dabei bevorzugt jene Daten, die Auskunft über den Fehlerwert eines Taststiftes aufgrund von Deformationen während der Messungen durch Aufbringen einer Kraft F geben. Die gemessene kraftabhängige Biegekennlinie wird in Form eines Maximalfehlers in Abhängigkeit der Kraft auf dem RFID-Chip gespeichert.

Weiter wird die Aufgabe der vorliegenden Erfindung durch eine Messvorrichtung gelöst, die einen Taststift gemäß den vorhergehenden Ansprüchen umfasst, wobei mittels einer schnurlosen Verbindung mit einem Messgerät (20) Biegekennzeichnungs-Daten von dem RFID-Chip (50) auslesbar sind.

Unter einer Messvorrichtung versteht man bevorzugt eine Vorrichtung zum Feststellen longitudinaler oder vertikaler Abweichungen bzw. Dimensionen eines Messobjekts.

Gemäß einem weiteren Aspekt der vorliegenden Erfindung ist es bevorzugt, dass mittels einer schnurlosen Verbindung von einem Messgerät die kraftabhängigen Biegekennlinien und geometrischen Daten von dem RFID-Chip auslesbar sind. Ein Messgerät verfügt dabei bevorzugt über eine Sende-Empfangs-Einheit (auch Reader genannt), um Daten von dem RFID-Chip auslesen zu können.

Gemäß einem weiteren Aspekt der vorliegenden Erfindung ist es bevorzugt, dass das Kontaktelement eine Kugel ist. Dabei ist es bevorzugt, dass die Kugel auf dem Taststift mittels Klebstoff, einem Lötverfahren oder einer Klemmverbindung, etc. fest angebracht ist. Die Form einer Kugel ist bevorzugt, da von dieser herstellerspezifische Daten vorliegen und sich die Kugelform als vorteilhaft bei Messungen herausgestellt hat.

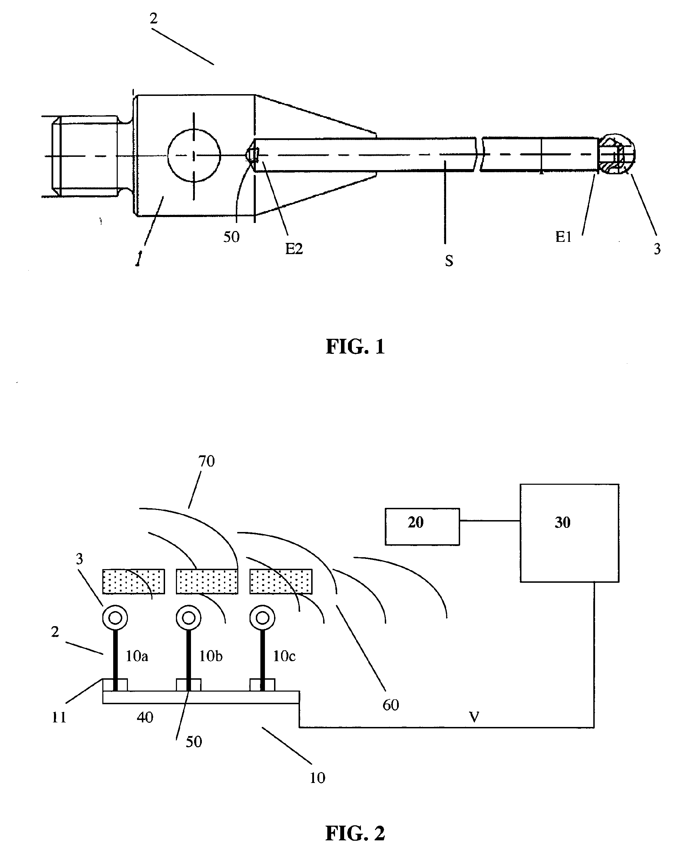

Die Aufgabe der Erfindung wird auch durch ein Verfahren zum Berücksichtigen von Biegekennzeichnungs-Daten einer Messvorrichtung (Fig. 1) mit einem erfindungsgemäßen Taststift (Fig. 1, Pos. 1) gelöst, wobei das Verfahren die Schritte umfasst:
Auslesen von den Taststift charakterisierenden Daten von dem RFID-Chip (50),
Übertragen der den Taststift charakterisierenden Daten an einen Rechner (30),
Berücksichtigen der den Taststift charakterisierenden Daten bei einer Auswertung von Messdaten durch den Rechner (30).

Unter dem Schritt des Auslesens von den Taststift charakterisierenden Daten, wobei diese Daten bevorzugt kraftabhängige Biegekennlinien und geometrische Daten von einem an dem Taststift angeordneten RFID-Chip sind, versteht man die kraftabhängigen Biegekennlinien und geometrischen Daten, die auf dem RFID-Chip gespeichert sind, wobei diese durch eine geeignete Vorrichtung ausgelesen werden, bevorzugt ein Messgerät, das über eine entsprechende Sende-Empfangs-Einheit (Reader) verfügt. Das Messgerät stellt mittels geeigneter Funkfrequenz-Signale eine schnurlose Kommunikationsverbindung mit dem RFID-Chip her und kann anschließend die kraftabhängigen Biegekennlinien und geometrische Daten bevorzugt des Taststifts und Kontaktelements von dem RFID-Chip auslesen.

Unter dem Schritt des Übertragens der kraftabhängigen Biegekennlinien und geometrischen Daten an einen Rechner, versteht man bevorzugt, dass die auf dem RFID-Chip gespeicherten kraftabhängigen Biegekennlinien und geometrischen Daten des Taststiftes schnurlos oder über ein Datenkabel bzw. Datenverbindung an einen Rechner, bevorzugt ein PC oder einen Server übertragen werden, welcher die Auswertung der Messdaten vornimmt. Ein derartiger Rechner ist bevorzugt ein Prozessor, welcher eine Steuerung und Regelung der entsprechenden Messvorrichtungen steuert bzw. regelt.

Unter dem Schritt des Berücksichtigens der kraftabhängigen Biegekennlinien und geometrische Daten bei einer Auswertung von Messdaten durch den Rechner versteht man bevorzugt, dass bei der Auswertung der Messdaten, die auf dem RFID gespeicherten kraftabhängigen Biegekennlinien und geometrische Daten des Taststiftes bei der Auswertung der Messergebnisse durch einen mit dem Messgerät verbunden PC berücksichtigt werden, d.h. dass die entsprechenden Fehlerwerte des Taststiftes bei der Auswertung der Messdaten berücksichtigt werden.

Gemäß einem weiteren Aspekt der vorliegenden Erfindung ist es bevorzugt, dass die kraftabhängigen Biegekennlinien und geometrischen Daten durch ein Messgerät ausgelesen werden. Bevorzugt weist dieses Messgerät, wie bereits vorhergehend erwähnt, eine Sende-Empfangs-Einheit auf, über welche die auf dem RFID-Chip gespeicherten kraftabhängigen Biegekennlinien und geometrische Daten ausgelesen werden können.

Darüber hinaus ist es bevorzugt, dass eine Messvorrichtung über eine Vielzahl von Haltevorrichtungen verfügt, wobei in jede einzelne Haltevorrichtung ein Taststift mit integriertem RFID-Chip eingesetzt und auf diesen ein Kontaktelement, wie vorhergehend beschrieben, angebracht ist. Gemäß dem erfindungsgemäßen Verfahren werden bevorzugt, von jedem einzelnen Taststift die kraftabhängigen Biegekennlinien und geometrische Daten an ein Messgerät der Gesamtmessanlage übertragen, von einem PC ausgewertet und bei den jeweiligen Messergebnissen berücksichtigt.

Bevorzugte Ausführungsformen der Erfindung werden nachfolgend anhand der beigefügten Zeichnung näher erläutert.

**Figur 1** zeigt eine Draufsicht auf den erfindungsgemäßen Taststift mit integriertem RFID-Chip.

**Figur 2** zeigt eine Vielzahl von Messvorrichtungen mit integriertem RFID-Chip.

In **Figur 1** ist eine Draufsicht auf den erfindungsgemäßen Taststift 2 mit einem integrierten RFID-Chip dargestellt.

Der Taststift 2 weist dabei einen Schaft S mit einem ersten Ende E1 und einem zweiten Ende E2 auf. Die Geometrie des Schaftes (S) des Taststiftes 2 entspricht einem Zylinder, wobei dessen erstes Ende E1 ein verjüngtes zylindrisches Ende aufweist, auf welches eine Kugel 3 als Kontaktelement aufgeklebt ist, die während eines Messvorgangs mit dem Messobjekt in Kontakt gebracht wird.

Das zweite Ende E2 des Taststiftes 2 weist eine kegelstumpfförmige Form auf, welche eine Vertiefung in Form einer Bohrung an ihrem Ende aufweist, in welches der erfindungsgemäße RFID-Chip 50 eingeklebt ist.

Der Taststift 2 ist mit seinem zweiten Ende E2 in einen Halter 1 eingebracht, welche eine zylinderförmige Vertiefung aufweist. Die Verbindung zwischen dem Schaft S des Taststiftes und der Haltervorrichtung 1 kann durch Klebstoff, einem Lötverfahren, einer Schrumpfverbindung oder einer Pressverbindung etc. oder dessen Kombinationen ausgeführt sein. Die Verbindung zwischen dem Taststift 2 und der Haltevorrichtung bzw. dem Tastkopf 1 ist eine Schraubverbindung.

Der Taststift weist in diesem Beispiel die folgenden Parameter auf: der Halter 1 ist aus Stahl gemäß DIN 1.4305 gefertigt, der Schaft S des Taststiftes 2 ist aus Hartmetall gefertigt und die Kugel 3 besteht aus Rubin.

Die Gesamtlänge von Taststift, Kontaktelement und Haltevorrichtung beträgt in diesem Beispiel 30,5 mm.

Die Kugel des Kontaktelements weist eine Rauheit von 0,02 µm auf.

In **Figur 2** sind drei Messvorrichtungen 10a, 10b und 10c dargestellt, die einen Taststift 2 mit einem Halter 1 und einem Kontaktelement 3 aufweisen, wie bereits in Fig. 1 beschrieben wurde. In die Haltevorrichtungen bzw. Tastköpfe 11 der Messvorrichtungen 10a bis 10c werden die jeweiligen Taststifte 2 eingeschraubt.

Weiter ist in Fig. 2 ein Messvorrichtungs-Aktuator 40 dargestellt, welcher die Messvorrichtungen 10a-10c aktiviert um mit dem Messobjekt 60 in Kontakt zu gelangen, sowie ein Messgerät 20 und ein PC 30.

Mittels der Fig. 2 soll das Verfahren zum Berücksichtigen von den Taststift charakterisierenden Daten, insbesondere Biegekennzeichnungs-Daten einer Messvorrichtung erläutert werden.

Die den Taststift charakterisierenden Daten wurden bereits mit einem Verfahren für eine Eichvorrichtung ermittelt, welches in der EP 1248073 B1 ausführlich beschrieben wurde und auf welches hier nicht mehr näher eingegangen wird.

Zunächst befestigt ein Benutzer der Messvorrichtung 10, eine Vielzahl von Messvorrichtungen 10a, 10b und 10c in der jeweiligen Haltevorrichtung 11 der einzelnen Messvorrichtungen 10a-l0c. Dabei werden die Taststifte 2 in die jeweiligen Haltevorrichtungen 11 der einzelnen Messvorrichtungen 10a-10c eingesteckt.

Jede Messvorrichtung 10a-10c weist ein Kontaktelement 3 auf, welches aus Rubin gefertigt ist und die Kenndaten (maximale Durchmesser-Abweichung, maximale Formabweichung, Rauheit) aufweist, die bereits in Fig. 1 beschrieben wurden.

Am zweiten Ende E2 der Taststifte 2 ist jeweils ein RFID-Chip 50 mittels eines Etiketts angeklebt.

Sobald die jeweiligen Taststifte 1 mit den jeweiligen spezifischen RFID-Chips 50 in die Haltevorrichtungen 11 der jeweiligen Messvorrichtungen 10a-10c eingebracht worden sind, aktiviert der Nutzer mittels seines Rechners 30 das Messgerät 20.

Dieses Messgerät verfügt über eine Sende-Empfänger-Einheit, die mittel Funkfrequenzwellen 70 (RFID) eine schnurlose Verbindung zwischen den einzelnen RFID-Chips 50 der Messvorrichtungen 10a-10c herstellt und die auf den RFID-Chips 50 gespeicherten Biegekennzeichnungs-Daten ausliest.

Auf den jeweiligen RFID-Chips 50 der jeweiligen einzelnen Messvorrichtungen 10a-10c sind die den Taststift charakterisierenden Daten, wie Biegekennlinien und geometrische Daten der Taststifte 1 und Kontaktelemente 3 gespeichert, welche ein auf dem PC 30 gespeichertes Messauswertungsprogramm bei der Auswertung der Messungen heranzieht, um die entsprechenden den Taststift charakterisierenden Daten bei der Auswertung der Messdaten zu berücksichtigen. In diesen den Taststift charakterisierenden Daten sind Durchmesser- und Formabweichungen der jeweiligen Taststifte und Kontaktelemente der Messvorrichtungen 10a-10c gespeichert.

Sobald das Messgerät 20 die den Taststift charakterisierenden Daten von den jeweiligen RFID-Chips 50 der Messvorrichtungen 10a-10c ausgelesen hat, werden diese an den PC 30 übermittelt, welcher diese bei den Messdaten, welche er über die Datenverbindung V zu den Messvorrichtungen 10a-10c erhalten hat, berücksichtigt. Hat also der PC über die Datenverbindung V bei dem Messobjekt 60 einen Messwert von 0,5 mm gemessen und beträgt der Fehler der Biegekennzeichnung + 0,01 mm, so korrigiert das Messauswertungsprogramm den tatsächlichen Wert auf 0,51 mm.

Mit der vorliegenden erfindungsgemäßen Messvorrichtung und dem erfindungsgemäßen Verfahren ist es somit mittels des in dem Taststift integrierten RFID-Chip möglich, auf effiziente und einfache Weise, Taststift- und Kontaktelement-spezifische Daten einer Vielzahl von Messvorrichtungen an ein mit einem PC verbundenes Messgerät zu übertragen, wobei der PC mittels eines Messauswertungsprogramm anschließend die gemessenen Werte der Messergebnisse um die Werte der Biegekennzeichnung korrigiert.

### Bezugszeichenliste

- 1: Halter
- 2: Taststift
- 3: Kontaktelement

- 10: Messvorrichtung

- 10a: 1-te Messvorrichtung
- 10b: 2-te Messvorrichtung
- 10c: 3-te Messvorrichtung

- 11: Haltevorrichtung
- 20: Messgerät

- 30: Rechner

- 40: Messvorrichtungs-Aktuator

- 50: RFID-Chip

- 60: Messobjekt

- 70: Funkwellen

- E1: Erstes Ende

- E2: Zweites Ende

- S: Schaft des Taststiftes

- V: Datenverbindung von 30 zu 10

## Patentansprüche

1. Taststift (2), umfassend einen Schaft (S) mit einem ersten Ende (E1) und einem zweiten Ende (E2), wobei der Schaft (S) an dem ersten Ende (E1) ein Kontaktelement (3) umfasst und mit dem zweiten Ende (E2) in einem Halter (1) anordenbar ist, und wobei der Taststift (2) einen RFID-Chip (50) umfasst.

2. Taststift gemäß Anspruch 1, **dadurch gekennzeichnet, dass** der RFID-Chip (50) an dem Schaft (S) angeordnet ist.

3. Taststift gemäß Anspruch 2, **dadurch gekennzeichnet, dass** der RFID-Chip (50) in dem zweiten Ende (E2) des Schaftes (S) angeordnet ist.

4. Taststift gemäß den vorhergehenden Ansprüchen, **dadurch gekennzeichnet, dass** auf dem RFID-Chip (50) den Taststift charakterisierende Daten speicherbar sind.

5. Taststift gemäß den vorhergehenden Ansprüchen, **dadurch gekennzeichnet, dass** das Kontaktelement (3) eine Kugel ist.

6. Taststift gemäß den vorhergehenden Ansprüchen, **dadurch gekennzeichnet, dass** das Kontaktelement (3) eine Sacklochkugel ist.

7. Messvorrichtung (10), die einen Taststift gemäß den vorhergehenden Ansprüchen 1 bis 6 umfasst, **dadurch gekennzeichnet, dass** mittels einer schnurlosen Verbindung mit einem Messgerät (20) Biegekennzeichnungs-Daten von dem RFID-Chip (50) auslesbar sind.

8. Verfahren zum Berücksichtigen von Biegekennzeichnungs-Daten einer Messvorrichtung (10) gemäß Anspruch 7, wobei das Verfahren die Schritte umfasst:
Auslesen von den Taststift charakterisierenden Daten von dem RFID-Chip (50),
Übertragen der den Taststift charakterisierenden Daten an einen Rechner (30),
Berücksichtigen der den Taststift charakterisierenden Daten bei einer Auswertung von Messdaten durch den Rechner (30).

9. Verfahren gemäß dem vorhergehenden Verfahrensanspruch, wobei das Auslesen der Biegekennzeichnungsdaten durch ein Messgerät erfolgt.
